# EUROPÄISCHE PATENTSCHRIFT

(11) **EP 2 146 088 B1**
(45) Veröffentlichungstag und Bekanntmachung des Hinweises auf die Patenterteilung: **04.01.2017**
(21) Anmeldenummer: 09008716.4
(22) Anmeldetag: 03.07.2009
(51) Int. Cl.: F02N 11/08

(54) **Verfahren zum Betreiben eines Motors eines Kraftfahrzeugs sowie Kraftfahrzeug**
Method for operating a motor of a vehicle and motor vehicle
Procédé de fonctionnement d'un moteur de véhicule automobile et véhicule automobile

(30) Priorität: 18.07.2008 DE 102008033752
(43) Veröffentlichungstag der Anmeldung: 20.01.2010
(73) Patentinhaber: Audi AG, 85045 Ingolstadt (DE)
(72) Erfinder: Pfaller, Stefan, 85131 Weigersdorf (DE); Schmidt, Jörg, 85057 Ingolstadt (DE)
(74) Vertreter: Thielmann, Frank

(56) Entgegenhaltungen:
- DE-A1- 10 139 595
- DE-A1-102004 056 926
- DE-A1-102006 057 892
- FR-A1- 2 875 556
- GB-A- 2 363 266
- US-A1- 2007 112 494

## Beschreibung

Die Erfindung betrifft ein Verfahren zum Betreiben eines Motors eines Kraftfahrzeugs. Die Erfindung betrifft auch ein Kraftfahrzeug, in dem das erfindungsgemäße Verfahren einsetzbar ist.

Zur Einsparung von Kraftstoff soll der Motor eines Kraftfahrzeugs bei einem Halt ausgeschaltet werden. Naturgemäß muss er wieder eingeschaltet werden, bevor das Kraftfahrzeug weiterfahren kann. Ein automatisches Aus- und Einschalten eines Motors ist in der DE 101 29 878 A1 und der DE 101 39 595 A1 beschrieben. Das Aus- und Einschalten des Motors ist hierbei als vollautomatisch beschrieben, d. h. es werden keine Eingaben durch den Kraftfahrzeugführer mehr benötigt. Die DE 10 2005 013 886 A1 beschreibt, dass ein Fahrzeug mit einer bestimmten Geschwindigkeit gefahren wird, bei der durch geeignete Erfassungsmittel ein Abstand zu einem vorausfahrenden Fahrzeug berücksichtigt wird. Fahrereingaben haben einen Einfluss auf die Geschwindigkeitsregelung, die ansonsten aber automatisch arbeitet.

Die vorliegende Erfindung betrifft ein nicht ganz so hoch technisiertes System: Es wird davon ausgegangen, dass nach wie vor Eingabesignale durch den Kraftfahrzeugführer abgegeben werden. Der Kraftfahrzeugführer, soll sogar gerade das Gefühl haben, das Kraftfahrzeug autonom zu steuern. Es geht um das Aus- und Einschalten eines Motors bei einer solchen Steuerung durch den Kraftfahrzeugführer. Hierbei wird der Motor bei einem Halt, der dann typischerweise durch den Kraftfahrzeugführer herbeigeführt worden ist, automatisch ausgeschaltet. Zum Weiterfahren teilt der Kraftfahrzeugführer dem Kraftfahrzeug, z. B. einer Motorsteuerung des Kraftfahrzeugs, über ein Bedienelement einen Weiterfahrwunsch mit. Dann wird der Motor wieder eingeschaltet.

Das Bedienelement kann einfach die Kupplung sein, welche betätigt wird, die Gangschaltung, bei der ein Gang eingelegt wird, und bei Automatikfahrzeugen braucht lediglich das Gaspedal betätigt zu werden. Andere Möglichkeiten sind denkbar.

Bei einem Motorstart muss der Starter eingespurt werden. Der Motorstart geht mit einem erheblichen Spannungseinbruch auf dem Bordnetz des Kraftfahrzeuges einher. Ein Teil des Bordnetzes kann durch Einsatz entsprechender Wandler von dem Spannungseinbruch verschont werden. Ein anderer Teil, insbesondere an dem anderen Teil vorgesehene Einheiten (typischerweise Steuergeräte) müssen in einen vorbestimmten Zustand versetzt werden, bevor der Spannungseinbruch erfolgt. Entsprechend müssen vorher Signale an diese Einheiten gesandt werden. Das Versenden dieser Signale und das Versetzen der Einheiten in den vorbestimmten Zustand benötigt einige Zeit. Beim Erststart des Kraftfahrzeugs, wenn z. B. der Kraftfahrzeugführer den Zündschlüssel betätigt, ist die hierbei entstehende Zeitverzögerung unbeachtlich. Anders ist es, wenn der Motor während der eigentlichen Fahrt bei einem vom Kraftfahrzeug herbeigeführten Halt automatisch ausgeschaltet wird und der Kraftfahrzeugführer dann wieder weiterfahren will. Teilt er dann über das Bedienelement seinen Weiterfahrwunsch mit, erwartet er eine sofortige Reaktion des Kraftfahrzeugs, also einen sofortigen Widerstart des Motors. Bisher ist dies so nicht möglich, weil die Signale an die Einheiten gesandt werden müssen und diese in einen vorbestimmten Zustand versetzt werden müssen.

Aus der Druckschrift DE 10 2006 057 892 A1 geht ein Verfahren zur Vormagnetisierung einer elektrischen Maschine hervor. Dabei wird das Verfahren für einen automatischen Start einer Brennkraftmaschine mit Start-Stopp-Automatik bei einem Kraftfahrzeug angewendet, wobei ausgehend von einer durch einen automatischen Motorstopp eingeleiteten Stoppphase der Brennkraftmaschine innerhalb dieser Stoppphase und vor Vorhandensein einer Startaufforderung für den automatischen Motorstart die elektrische Maschine vormagnetisiert wird.

Aus der Druckschrift FR 2 875 556 A1 ist ein Verfahren zum Steuern einer reversiblen elektrischen Maschine bekannt. Bei dem Verfahren wird eine Startphase einer Brennkraftmaschine eines Kraftfahrzeugs für die reversible elektrische Maschine vorbereitet, wobei das Kraftfahrzeug mit einem automatischen Start-Stopp-System ausgestattet ist. Dabei weist die elektrische Maschine einen Rotor auf, welcher mit der Brennkraftmaschine verbunden ist. Das Verfahren umfasst die Erkennung eines Startbefehls und das Anlegen eines Magnetisierungsstroms an den Rotor der elektrischen Maschine.

Aus der Druckschrift US 2007/0112494 A1 ist ein Verfahren zur Steuerung eines Kraftfahrzeugs bekannt. Dabei umfasst das Verfahren die Überwachung der Umgebungsbedingungen um das Kraftfahrzeug und das Wiedereinschalten des Verbrennungsmotors sobald sich aufgrund der beobachteten Umgebungsbedingungen die Möglichkeit ergibt, das Kraftfahrzeug vorwärts zu bewegen.

In der Druckschrift GB 2 363 266 A ist ein Verfahren zur Reduzierung der Startphase eines Verbrennungsmotors beschrieben. Dabei wird die Startphase durch eine Vormagnetisierung der Induktionsmaschine reduziert.

Es ist Aufgabe der Erfindung, einen Start-Stopp-Betrieb eines Motors eines Kraftfahrzeugs, das von einem Kraftfahrzeugführer gesteuert wird, zu ermöglichen, bei dem der Kraftfahrzeugführer die Bedienung des Kraftfahrzeugs als komfortabel empfindet, also ohne dass es zu den oben genannten störenden Verzögerungen beim Wiedereinschalten des Motors kommt.

Die Aufgabe wird durch ein Verfahren mit den Merkmalen gemäß Patentanspruch 1 und ein Kraftfahrzeug mit den Merkmalen gemäß Patentanspruch 5 gelöst.

Erfindungsgemäß umfasst das Verfahren, dass nach einem Halt (und einen damit einhergehenden Ausschalten des Motors) die Kraftfahrzeugumgebung (durch geeignete Mittel zum Erfassen) erfasst wird (hinsichtlich spezifischer Aspekte) und dass eine Analyse (z. B. von bei der Erfassung gewonnen Signalen oder vorläufiger Erfassungsergebnisse) daraufhin erfolgt, ob mit einer Mindestwahrscheinlichkeit (nach einem vorbestimmten Kriterium) eine nachfolgende Mitteilung eines Weiterfahrwunsches zu erwarten ist. Falls dies der Fall ist, werden Signale ausgesandt, durch die ein Versetzen der Einheiten in den vorbestimmten Zustand ausgelöst wird. Nach dem Aussenden der Signale wird eine vorbestimmte Zeitdauer abgewartet. Es kann nun sein, dass nach dem Aussenden der Signale und vor Ablauf der vorbestimmten Zeitdauer ein Fahrerwunsch mitgeteilt wird. Dann erfolgt ein Wiedereinschalten des Motors nach der vorbestimmten Zeitdauer. Es kann außerdem sein, dass erst nach der vorbestimmten Zeitdauer ein Weiterfahrwunsch mitgeteilt wird. Dann erfolgt ein sofortiges Wiedereinschalten des Motors.

Die vorbestimmte Zeitdauer soll so gewählt sein, dass für das Aussenden der Signale und das Versetzen der Einheiten in den vorbestimmten Zustand genau ausreichend Zeit ist. Erfindungsgemäß werden die Signale ausgesandt, bevor im Regelfall der Weiterfahrwunsch mitgeteilt wird. Dadurch wird Zeit gewonnen, nämlich im Falle, dass vor Ablauf der vorbestimmten Zeitdauer der Weiterfahrwunsch mitgeteilt wird, der von der vorbestimmten Zeitdauer bis dahin verstrichene Anteil gewonnen, und ansonsten erfolgt ja ein sofortiges Wiedereinschalten, es wird also die gesamte Zeit zum Absenden der Signale und Verbringen der Einheiten in einen vorbestimmten Zustand gewonnen.

Der Kraftfahrzeugführer kriegt auf diese Weise nichts oder höchstens wenig davon mit, dass das Wiederstarten bzw. Wiedereinschalten des Motors eine bestimmte Zeit benötigt. Dadurch empfindet er die Führung des Kraftfahrzeugs als komfortabel. Durch das Aus- und Einschalten des Motors wird Kraftstoff eingespart, ohne dass der Kraftfahrzeugführer Einschränkungen erlebt.

Bei einer bevorzugten Ausführungsform verbleiben die Einheiten nicht dauerhaft in dem vorbestimmten Zustand, in den sie versetzt wurden: Wird durch die weiteren Einheiten beispielsweise ein Scheibenwischer betrieben, ist es sinnvoll, diesen irgendwann wieder weiterlaufen zu lassen, wenn das Kraftfahrzeug weiter stehen bleibt. Somit wird nach Nichtmitteilung eines Weiterfahrwunsches während einer Höchstzeitdauer seit dem Aussenden der Signale den Einheiten ein Verlassen des vorbestimmten Zustands ermöglicht, z. B. durch abermaliges Aussenden von Signalen, welche nunmehr typischerweise andere Signale sind.

Grundsätzlich kann als Kraftfahrzeugumgebung ein Verkehrszeichen, z. B. eine Ampel beobachtet werden und der Schaltzustand der Ampel erfasst werden: Schaltet die Ampel auf "Grün", so ist damit zu rechnen, dass der Kraftfahrzeugführer weiterfahren will. Bevorzugt wird jedoch davon Gebrauch gemacht, dass ein Kraftfahrzeug ohnehin über Mittel zum Erfassen des Abstands zu einem vor den Kraftfahrzeug angeordneten anderen Kraftfahrzeug verfügt oder kostengünstig mit diesen ausgestattet werden kann. Durch Erfassen eines solchen Abstandes und ein Analysieren desselben auf eine zeitliche Änderung hin kann ermittelt werden, ob das andere Kraftfahrzeug von dem eigenen Kraftfahrzeug wegfährt. Da das andere Kraftfahrzeug ein Hindernis darstellte, das möglicherweise zum vom Kraftfahrzeugführer herbeigeführten Halt geführt hat, wird ein Weiterfahrwunsch betreffend das eigene Kraftfahrzeug erwartet.

Die weiteren Einheiten sind wie oben erwähnt an das Bordnetz des Kraftfahrzeugs angeschlossene Steuergeräte, die ihrerseits auf andere Einheiten Einfluss nehmen.

Das Versetzen in den vorbestimmten Zustand kann dann ein Ausschalten von mit den Steuergeräten gekoppelten Verbrauchern beinhalten, damit diese von dem Spannungseinbruch beim Motorstart nicht betroffen sind. Das Versetzen in den vorbestimmten Zustand kann auch ein Abspeichern von Daten durch die Steuergeräte umfassen, damit diese Daten bei einem Spannungseinbruch nicht verloren gehen können. Es sind andere vorbestimmte Zustände denkbar, z. B. können die Einheiten in einen Grundzustand versetzt werden, in dem sie sich bei Stillstand des Kraftfahrzeugs oder beim Erststart des Kraftfahrzeugs befinden.

Das erfindungsgemäße Kraftfahrzeug umfasst einen Motor, ein Motorsteuergerät, dem ein Bedienelement zugeordnet ist, sowie weitere Steuergeräte. Außerdem umfasst es Mittel zum Erfassen von Kraftfahrzeugumgebungsbedingungen, die mit zumindest dem Motorsteuergerät gekoppelt sind. Die Mittel sind dazu eingerichtet, nach dem Halt eine Kraftfahrzeugumgebung zu erfassen. Durch die Kopplung wird es möglich, dass das Motorsteuergerät Ergebnisse, die die Mittel zum Erfassen von Umgebungsbedingungen aufnehmen, verwertet. Ferner ist das Motorsteuergerät dazu ausgelegt, bei einem durch den Kraftfahrzeugführer herbeigeführten Halt automatisch den Motor auszuschalten und nach Mitteilung eines Weiterfahrwunsches durch den Kraftfahrzeugführer über ein Bedienelement wieder einzuschalten, die weiteren Steuergeräte in dem Kraftfahrzeug vor dem Wiedereinschalten des Motors in einen vorbestimmten Zustand zu versetzten, eine Analyse durchzuführen, ob mit einer Mindestwahrscheinlichkeit eine nachfolgende Mitteilung eines Weiterfahrwunsches zu erwarten ist, und falls dies der Fall ist, dazu ausgelegt ist, Signale, durch die das Versetzten der weiteren Steuergeräte in den vorbestimmten Zustand ausgelöst wird, auszusenden, nach dem Aussenden der Signale vor dem Wiedereinschalten des Motors eine vorbestimmte Zeitdauer abzuwarten und den Motor nach der vorbestimmten Zeitdauer bei einem nach dem Aussenden vor Ablauf der vorbestimmten Zeitdauer mitgeteilten Weiterfahrwunsch wieder einzuschalten oder den Motor bei einem nach der vorbestimmten Zeitdauer mitgeteilten Weiterfahrwunsch sofort wieder einzuschalten.

So soll das Motorsteuergerät für den Motor ausgelegt sein, die Abgabe von einen bevorstehen Motorstart anzeigenden Signalen an zumindest einen Teil der weiteren Steuergeräte in Abhängigkeit von den Mitteln zum Erfassen an das Motorsteuergerät übermittelten Signalen durchzuführen. Dass die Abgabe in Abhängigkeit von solchen Signalen erfolgt, kann insbesondere eine zeitliche Triggerung durch das Übermitteln solcher Signale beinhalten, wenn die Mittel zum Erfassen von Umgebungsbedingungen selbst eine Analyse vornehmen.

Es ist auch möglich, dass die Mittel zum Erfassen von Umgebungsbedingungen an das Motorsteuergerät gewisse Informationen weitergeben und das Motorsteuergerät selbst diese Informationen verwertet und aufgrund des Analyseergebnisses einen Zeitpunkt für die Abgabe von einen bevorstehenden Motorstart anzeigenden Signalen ermittelt oder festlegt.

Nachfolgend wird eine bevorzugte Ausführungsform der Erfindung unter Bezug auf die Zeichnung beschrieben, in der
- Fig. 1: schematisch eine Anordnung von Steuergeräten, wie sie die Durchführung eines erfindungsgemäßen Verfahrens ermöglicht, veranschaulicht und
- Fig. 2: eine Schrittfolge bei einem erfindungsgemäßen Verfahren in einem Flussdiagramm veranschaulicht.

In einem Kraftfahrzeug wird ein in der Figur nicht gezeigter Motor mittels eines Motorsteuergeräts 10 angesteuert, nämlich ein- und wieder ausgeschaltet. Das Motorsteuergerät ist mit einer Bedieneinrichtung 12 gekoppelt, über die Wünsche des Kraftfahrzeugführers mitgeteilt werden können. Vorliegend steht die Mitteilung eines Weiterfahrwunsches bei stehendem, angehalten habendem Kraftfahrzeug im Vordergrund des Interesses.

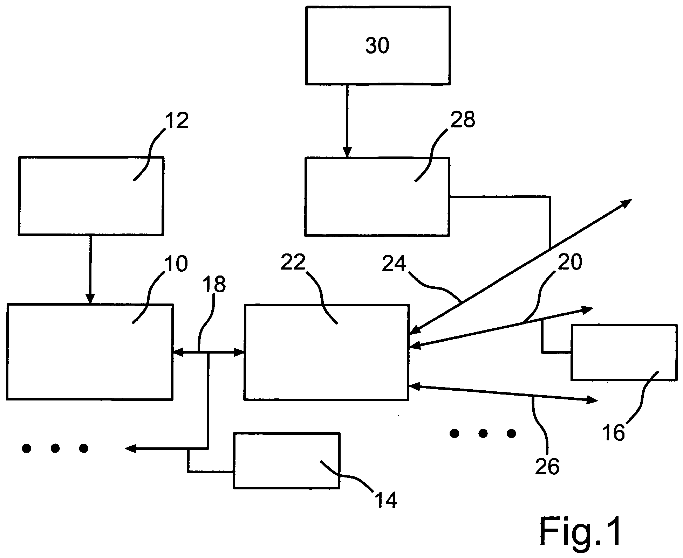

Das Kraftfahrzeug weist neben dem Motorsteuergerät 10 weitere Steuergeräte 14 und 16 auf. Diese sind über ein Bussystem miteinander gekoppelt, wobei in Fig. 1 das Steuergerät 14 als direkt über einen Bus 18 mit dem Motorsteuergerät 10 gekoppelt gezeigt ist. Das Steuergerät 16 hingegen ist an einen Bus 20 angeschlossen, der über ein Gateway 22 mit dem Bus 18 und damit dem Motorsteuergerät gekoppelt ist. Auch weitere Busse 24 und 26 sind über das Gateway 22 mit dem Bus 18 und damit dem Motorsteuergerät 10 gekoppelt. Es kann weitere Busse geben. Dies ist zu beiden Seiten des Gateways durch jeweils drei Punkte angedeutet.

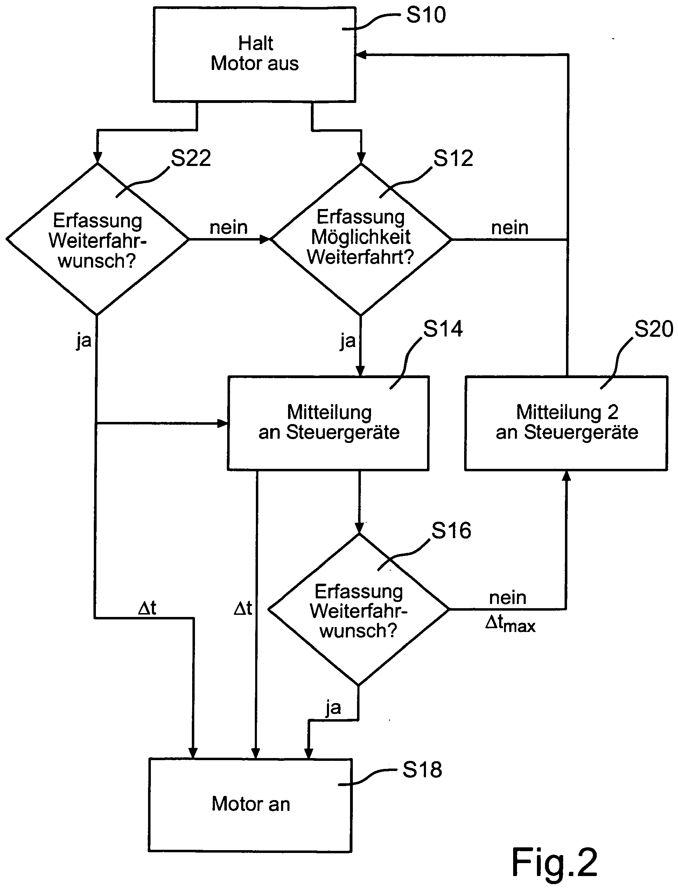

An dem Bus 24 ist ein Steuergerät 28 angeschlossen und somit mit dem Motorsteuergerät 10 gekoppelt. Dieses Steuergerät 28 empfängt über geeignete Erfassungsmittel 30 eine Information über den Abstand, den das eigene Kraftfahrzeug zu einem anderen, typischerweise einem vor dem Kraftfahrzeug befindlichen Kraftfahrzeug hat. Durch die Kopplung des Steuergerätes 28 mit dem Motorsteuergerät 10 ist es möglich, dass das Motorsteuergerät 10 Ergebnisse der Abstandserfassung berücksichtigt. Damit ist es möglich, das nachfolgend anhand von Fig. 2 erläuterte Verfahren durchzuführen:
Das Verfahren beginnt mit Schritt S10: Das Kraftfahrzeug wurde angehalten und der Motor ausgestellt. Es ist davon ausgegangen, dass sich das Kraftfahrzeug in einem noch aktivierten Zustand befindet, also dass nicht eine Außerbetriebnahme des Kraftfahrzeugs, z. B. durch Ziehen des Zündschlüssels erfolgt, sondern dass während des Betriebs des Kraftfahrzeugs ein Halt des Kraftfahrzeugs erfolgt ist und hierbei der Motor durch das Motorsteuergerät 10 automatisch ausgeschaltet wurde.

In Schritt S12 wird nun geprüft, ob eine Weiterfahrt des Kraftfahrzeugs möglich ist. Dieses erfolgt durch das Steuergerät 28: Ist der Abstand zu einem vor dem eigenen Kraftfahrzeug befindlichen anderen Kraftfahrzeug klein, so kann das eigene Kraftfahrzeug nicht weiterfahren, die Frage in Schritt S12 wird also mit "Nein" beantwortet, und es bleibt beim Schritt S10. Schritt S12 wird so lange durchgeführt oder wiederholt, bis die Frage, dass es die Möglichkeit einer Weiterfahrt gibt, mit "Ja" beantwortet wird. Dies kann anhand einer zeitlichen Änderung des Abstands zu einem anderen Kraftfahrzeug ermittelt werden: Fährt das andere Kraftfahrzeug weg, so gibt es kein Hindernis mehr, und es gibt die Möglichkeit einer Weiterfahrt des eigenen Kraftfahrzeugs.

Sobald die Frage der Möglichkeit der Weiterfahrt mit "Ja" beantwortet ist, wird zum Schritt S14 übergegangen. Das Motorsteuergerät 10 teilt den Steuergeräten 14 und 16 mit, dass mit einer Weiterfahrt zu rechnen ist. Demgemäß werden die Steuergeräte 14 und 16 dazu gebracht, in einen Zustand überzugehen, in dem ein Motorstart möglich ist. Bei einem Motorstart kommt es zu einem Spannungseinbruch auf dem gesamten Bordnetz. Die Steuergeräte 14 und 16 bereiten sich auf diesen Spannungseinbruch durch Einnahme des vorbestimmten Zustands vor. Beispielsweise werden Daten abgespeichert und Verbraucher an den Steuergeräten 14 und 16 abgeschaltet.

Nach Schritt S14 wird nun der Schritt S16 durchgeführt: Es wird erfasst, ob es einen Weiterfahrwunsch durch den Kraftfahrzeugführer gibt. Dies erfasst das Motorsteuergerät 10 wie oben erwähnt anhand einer Betätigung des Bedienelements 12 durch den Kraftfahrzeugführer.

Sobald ein Weiterfahrwunsch erfasst wurde, kann zum Schritt S18 übergegangen werden und der Motor eingeschaltet werden, wobei allerdings Bedingung ist, dass zwischen dem Schritt S14 und dem Schritt S18 eine Mindestzeitspanne Δt verstrichen ist, die zum Aussenden der Signale an die Steuergeräte 14 und 16 und das Einnehmen eines vorbestimmten Zustands durch diese benötigt wird. Insofern der Weiterfahrwunsch vor Ablauf der Zeit Δt erfasst wurde, muss noch das vollständige Verstreichen der Zeit Δt abgewartet werden, bis der Schritt S18 durchgeführt wird, also der Motor wieder eingeschaltet wird, damit ein mit dem Wiedereinschalten einhergehender Spannungseinbruch die Steuergeräte 14 und 16 und daran angeschlossene Verbraucher nicht beeinträchtigt. Insofern eine Erfassung des Weiterfahrwunsches gemäß Schritt S16 erst nach Verstreichen der Zeit Δt erfolgt, kann der Motor gemäß Schritt S18 unmittelbar eingeschaltet werden. Dies ist bei üblichen Zeiten Δt von gleich 200 ms der Regelfall, denn die Reaktionszeit eines Kraftfahrzeugführers ist größer als Δt: Die Mitteilung an die Steuergeräte S14 erfolgt daher wesentlich schneller, als der Fahrer seinen Weiterfahrwunsch mitteilen kann.

Wenn in Schritt S16 bis zu einem Verstreichen einer Zeit Δtₘₐₓ seit dem Schritt S14 kein Weiterfahrwunsch erfasst wurde, wird zum Schritt S10 übergegangen, es bleibt der Motor also aus. Es erfolgt hierbei eine zweite Mitteilung an die Steuergeräte gemäß Schritt S20: Diese können den vorbestimmten Zustand wieder verlassen. Ist der Verbraucher an einem Steuergerät 14 und 16 beispielsweise ein Beleuchtungsmittel, eine Scheibenwischeranlage o. ä., so ist es wünschenswert, dass während des andauernden Halts des Kraftfahrzeugs diese Verbraucher wieder weiterbetrieben werden. Das Verfahren ist auch dann durchführbar, wenn nach Schritt S16 nicht zu Schritt S10 zurückgekehrt wird oder nicht über Schritt S20 zum Schritt S10 zurückgekehrt wird.

Es ist selbstverständlich möglich, dass ein Weiterfahrwunsch erfasst wird, bevor das Steuergerät 28 das Wegfahren eines vor dem eigenen Kraftfahrzeug befindlichen Kraftfahrzeugs erfasst hat. Daher gibt es bevorzugt auch gemäß Schritt S22 eine frühzeitige Erfassung, ob ein Weiterfahrwunsch besteht. Solange diese Frage mit "Nein" beantwortet wird, wird mit Schritt S12 fortgefahren. Sobald ein Weiterfahrwunsch registriert wird, ohne dass eine Möglichkeit zur Weiterfahrt erfasst wurde, erfolgt wie im Stand der Technik üblich eine Mitteilung an die Steuergeräte gemäß Schritt S14 und ein Einschalten des Motors gemäß Schritt S18, allerdings mit einer Zeitverzögerung von Δt bezogen auf die Mitteilung an die Steuergeräte.

Sobald die Schrittfolge S12, S14 und S16 durchlaufen wird, wird durch das Verfahren Zeit eingespart, denn die Erfassung des Weiterfahrwunsches gemäß Schritt S16 erfolgt erst nach der Mitteilung an die Steuergeräte gemäß Schritt S14, so dass bis zum Wiedereinschalten des Motors gemäß Schritt S18 nicht die gesamte Zeit Δt abgewartet werden muss. Besonders vorteilhaft ist es, wenn wie im Regelfall üblich der Weiterfahrwunsch gemäß Schritt S16 erst nach Verstreichen der Zeit Δt erfasst wird, so dass der Motor unmittelbar eingeschaltet werden kann. Der Kraftfahrzeugführer hat dann das Gefühl, volle Gewalt über das Kraftfahrzeug zu haben und empfindet die Bedienung des Kraftfahrzeugs als natürlich. Er wird nicht dadurch gestört, dass bei einem Halt des Kraftfahrzeugs der Motor ausgeschaltet und später wieder eingeschaltet wird und hierbei Kraftstoff eingespart wird.

## Patentansprüche

1. Verfahren zum Betreiben eines Motors eines Kraftfahrzeugs, der bei einem durch den Kraftfahrzeugführer herbeigeführten Halt automatisch ausgeschaltet wird (S10) und nach Mitteilung eines Weiterfahrwunsches durch den Kraftfahrzeugführer über ein Bedienelement (12) wieder eingeschaltet wird,
umfassend die Schritte:
- Erfassen einer Kraftfahrzeugumgebung nach dem Halt (S10),
- Durchführen einer Analyse (S12), ob mit einer Mindestwahrscheinlichkeit eine nachfolgende Mitteilung eines Weiterfahrwunsches zu erwarten ist und falls dies der Fall ist,
- Aussenden von Signalen (S14), durch die ein Versetzen bestimmter Einheiten (14, 16) in einen vorbestimmten Zustand ausgelöst wird,
- Versetzen der bestimmten Einheiten (14, 16) in dem Kraftfahrzeug vor dem Wiedereinschalten des Motors in den vorbestimmten Zustand, wobei die Einheiten (14,16) an ein Bordnetz des Kraftfahrzeugs angeschlossene Steuergeräte sind, wobei nach dem Aussenden der Signale eine vorbestimmte Zeitdauer (Δt) abgewartet wird, und wobei der Motor (S18) nach der vorbestimmten Zeitdauer (Δt) bei einem nach dem Aussenden vor Ablauf der vorbestimmten Zeitdauer (Δt) mitgeteilten Weiterfahrwunsch (S16) wiedereingeschaltet wird oder bei einem nach der vorbestimmten Zeitdauer (Δt) mitgeteilten Weiterfahrwunsch (S16) sofort wieder eingeschaltet wird.

2. Verfahren nach Anspruch 1, wobei nach Nichtmitteilung eines Weiterfahrwunsches (S16) während einer Höchstzeitdauer (Δtₘₐₓ) seit dem Aussenden (S14) der Signale den Einheiten (14, 16) ein Verlassen des vorbestimmten Zustands ermöglicht wird.

3. Verfahren nach Anspruch 1 oder 2, bei dem bei dem Erfassen (S12) der Kraftfahrzeugumgebung der Abstand zu einem vor dem eigenen Kraftfahrzeug angeordneten anderen Kraftfahrzeug erfasst wird und auf eine zeitliche Änderung hin analysiert wird, wobei bei einem Wegfahren des anderen Kraftfahrzeugs ein Weiterfahrwunsch betreffend das eigene Kraftfahrzeug erwartet wird.

4. Verfahren nach einem der vorhergehenden Ansprüche, wobei das Versetzen in den vorbestimmten Zustand ein Ausschalten von mit den Steuergeräten (14, 16) gekoppelten Verbrauchern und/oder ein Abspeichern von Daten durch die Steuergeräte (14, 16) umfasst.

5. Kraftfahrzeug mit einem Motor, mit einem Motorsteuergerät (10), dem ein Bedienelement (12) zugeordnet ist, und mit weiteren Steuergeräten (14, 16), und mit Mitteln (28, 30) zum Erfassen von Kraftfahrzeugumgebungsbedingungen, die mit zumindest dem Motorsteuergerät (10) gekoppelt sind, wobei das Motorsteuergerät (10) ausgelegt ist, bei einem durch den Kraftfahrzeugführer herbeigeführten Halt automatisch den Motor auszuschalten und nach Mitteilung eines Weiterfahrwunsches durch den Kraftfahrzeugführer über das Bedienelement (12) wieder einzuschalten; wobei die Mittel (28, 30) dazu eingerichtet sind, nach dem Halt eine Kraftfahrzeugumgebung zu erfassen, wobei das Motorsteuergerät (10) ferner dazu ausgelegt ist:
- die weiteren Steuergeräte (14,16) in dem Kraftfahrzeug vor dem Wiedereinschalten des Motors in einen vorbestimmten Zustand zu versetzten,
- eine Analyse durchzuführen, ob mit einer Mindestwahrscheinlichkeit eine nachfolgende Mitteilung eines Weiterfahrwunsches zu erwarten ist, und falls dies der Fall ist, dazu ausgelegt ist,
- Signale, durch die das Versetzten der weiteren Steuergeräte (14,16) in den vorbestimmten Zustand ausgelöst wird, auszusenden,
- nach dem Aussenden der Signale vor dem Wiedereinschalten des Motors eine vorbestimmte Zeitdauer (Δt) abzuwarten und
- den Motor nach der vorbestimmten Zeitdauer (Δt) bei einem nach dem Aussenden vor Ablauf der vorbestimmten Zeitdauer (Δt) mitgeteilten Weiterfahrwunsch wieder einzuschalten oder den Motor bei einem nach der vorbestimmten Zeitdauer (Δt) mitgeteilten Weiterfahrwunsch sofort wieder einzuschalten.

## Claims

1. Method for operating an engine of a motor vehicle which, in the event of a stop initiated by the motor vehicle driver, is automatically switched off (S10) and, after a communication by the motor vehicle driver of a desire to continue driving by means of an operating element (12), is switched on again,
comprising the steps of:
- detecting a motor vehicle environment after the stop (S10),
- carrying out an analysis (S12) as to whether with a minimum probability a subsequent communication of a desire to continue driving should be anticipated and, if this is the case,
- transmitting signals (S14) by means of which a movement of specific units (14, 16) into a predetermined state is initiated,
- moving the specific units (14, 16) in the motor vehicle into the predetermined state before the engine is switched on again, wherein the units (14, 16) are control units which are connected to an on-board network of the motor vehicle, wherein, after the signals have been transmitted, there is a wait for a predetermined time period (Δt), and wherein the engine (S18) is switched on again after the predetermined time period (Δt) in the event of a desire to continue driving (S16) has been communicated after transmission before the predetermined time period (Δt) has elapsed, or is switched on again immediately in the case of a desire to continue driving (S16) which is communicated after the predetermined time period (Δt).

2. Method according to Claim 1, wherein, after a desire to continue driving (S16) has not been communicated during a maximum time period (Δtₘₐₓ) since the transmission (S14) of the signals to the units (14, 16), it becomes possible to leave the predetermined state.

3. Method according to Claim 1 or 2, wherein, in the event of detection (S12) of the motor vehicle environment, the spacing with respect to another motor vehicle which is arranged in front of the individual motor vehicle is detected and analysed with respect to a time change, wherein, when the other motor vehicle drives away, a desire to continue driving relating to the individual vehicle is anticipated.

4. Method according to any one of the preceding claims, wherein the movement into the predetermined state involves switching off loads which are coupled to the control devices (14, 16) and/or a storage of data by the control devices (14, 16).

5. Motor vehicle having an engine, having an engine control device (10), with which an operating element (12) is associated, and having additional control devices (14, 16) and having means (28, 30) for detecting motor vehicle environmental conditions, which means are coupled to at least the engine control device (10), wherein the engine control device (10) is configured, in the event of a stop initiated by the motor vehicle driver, to automatically switch off the engine and, after communication of a desire to continue driving by the motor vehicle driver via the operating element (12), to switch it on again; wherein the means (28, 30) are configured after the stop to detect a motor vehicle environment, wherein the engine control device (10) is further configured:
- to move the additional control devices (14,16) in the motor vehicle into a predetermined state before the engine is switched on again,
- to carry out an analysis as to whether with a minimum probability a subsequent communication of a desire to continue driving should be anticipated and, if this is the case, is configured
- to transmit signals by means of which the movement of the additional control devices (14, 16) into the predetermined state is initiated,
- to wait after transmitting the signals for a predetermined time period (Δt) before the engine is switched on again, and
- to switch the engine on again after the predetermined time period (Δt) in the event of a desire to continue driving has been communicated after transmission before the predetermined time period (Δt) has elapsed, or to switch the engine on again immediately in the event of a communication of a desire to continue driving after the predetermined time period (Δt).

## Revendications

1. Procédé de fonctionnement d'un moteur d'un véhicule automobile, qui est automatiquement arrêté (S10) lors d'un arrêt provoqué par le conducteur du véhicule automobile et qui est redémarré après que le conducteur du véhicule automobile a exprimé son souhait de redémarrer par l'intermédiaire d'un élément de commande (12),
comprenant les étapes de :
- détection d'un environnement du véhicule automobile après l'arrêt (S10),
- réalisation d'une analyse (S12) pour savoir si, avec une probabilité minimale, une expression à venir d'un souhait de redémarrage est à attendre et, si c'est le cas,
- émission de signaux (S14) par lesquels est déclenché un placement de certaines unités (14, 16) dans un état prédéterminé,
- placements desdites unités (14, 16) dans le véhicule automobile, avant le redémarrage du moteur, dans l'état prédéterminé, dans lequel les unités (14, 16) sont des appareils de commande raccordés à un réseau de bord du véhicule automobile, dans lequel un délai prédéterminé (Δt) est attendu après l'émission des signaux, et dans lequel le moteur (S18) est redémarré après le délai prédéterminé (Δt) en présence d'un souhait de redémarrage (S16) exprimé après l'émission avant l'expiration du délai prédéterminé (Δt) ou est redémarré immédiatement en présence d'un souhait de redémarrage (S16) exprimé après le délai prédéterminé (Δt).

2. Procédé selon la revendication 1, dans lequel, si aucun souhait de redémarrage (S16) n'a été exprimé pendant un délai maximal (Δtₘₐₓ) depuis l'émission (S14) des signaux aux unités (14, 16), il est possible de quitter l'état prédéterminé.

3. Procédé selon la revendication 1 ou 2, où, lors de la détection (S12) de l'environnement du véhicule automobile, la distance à un autre véhicule automobile situé devant le véhicule automobile considéré est détectée et est analysée en ce qui concerne sa variation dans le temps, dans lequel un souhait de redémarrage qui concerne le véhicule automobile considéré est attendu lorsque l'autre véhicule automobile s'éloigne.

4. Procédé selon l'une des revendications précédentes, dans lequel le placement dans l'état prédéterminé comprend un arrêt de consommateurs couplés aux appareils de commande (14, 16) et/ou une mémorisation de données par les appareils de commande (14, 16).

5. Véhicule automobile avec un moteur, avec un appareil de commande de moteur (10), auquel est associé un élément de commande (12), et avec d'autres appareils de commande (14, 16), et avec des moyens (28, 30) pour détecter des conditions d'environnement du véhicule automobile, qui sont couplés au moins à l'appareil de commande de moteur (10), dans lequel l'appareil de commande de moteur (10) est conçu pour, lors d'un arrêt provoqué par le conducteur du véhicule automobile, arrêter automatiquement le moteur et le redémarrer lorsque le conducteur du véhicule automobile exprime un souhait de redémarrage par l'intermédiaire de l'élément de commande (12) ; dans lequel les moyens (28, 30) sont conçus pour détecter après l'arrêt un environnement du véhicule automobile, dans lequel l'appareil de commande de moteur (10) est en outre conçu pour :
- placer les autres appareils de commande (14, 16) dans le véhicule automobile avant le redémarrage du moteur dans un état prédéterminé,
- effectuer une analyse pour savoir si, avec une probabilité minimale, une expression à venir d'un souhait de redémarrage est à attendre et, si c'est le cas, il est conçu pour
- émettre des signaux par lesquels est déclenché le placement des autres appareils de commande (14, 16) dans l'état prédéterminé,
- attendre un délai prédéterminé (Δt) après l'émission des signaux avant le redémarrage du moteur et
- redémarrer le moteur après le délai prédéterminé (Δt) en présence d'un souhait de redémarrage exprimé après l'émission avant l'expiration du délai prédéterminé (Δt) ou redémarrer immédiatement le moteur en présence d'un souhait de redémarrage exprimé après le délai prédéterminé (Δt).
